# EUROPEAN PATENT APPLICATION

(11) **EP 4 844 834 A1**
(43) Date of publication of application: **25.11.2026**
(21) Application number: 26179399.6
(22) Date of filing: 18.05.2026
(51) Int. Cl.: H01M 4/38, H01M 4/62, H01M 4/02

(54) **ELECTRODE FOR LITHIUM SECONDARY BATTERY AND METHOD FOR PREPARING THE SAME**

(30) Priority: 19.05.2025 KR 20250064802; 15.05.2026 KR 20260088114
(71) Applicant: SK On Co., Ltd., Seoul 03161 (KR); SK Innovation Co., Ltd., Seoul 03188 (KR)
(72) Inventor: SONG, Ju Hye, 34124 Daejeon (KR); LEE, Sang Ick, 34124 Daejeon (KR); PARK, Chan Hwi, 34124 Daejeon (KR); JIN, Seong Ho, 34124 Daejeon (KR)
(74) Representative: Prüfer & Partner mbB Patentanwälte · Rechtsanwälte

(57) **Abstract**

An electrode for a lithium secondary battery according to embodiments of the present disclosure may include a lithium metal layer and a coating layer disposed on at least one surface of the lithium metal layer and including lithium acetylide. Accordingly, non-uniform deposition of lithium and the growth of lithium dendrites may be suppressed, and the stability and electrical characteristics of the lithium secondary battery may be improved.

## Description

### [BACKGROUND OF THE INVENTION]

### 1. Field of the Invention

The present disclosure relates to an electrode for a lithium secondary battery and a method for preparing the same.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has a high operating voltage, high energy density per unit weight, and advantages in fast charging and lightweight design.

Graphite and silicon are mainly used as anode materials for lithium secondary batteries. However, since graphite and silicon have high reaction potentials and low capacities, there are limits to their ability to increase the energy density and capacity of lithium secondary batteries. Lithium metal, however, possesses low potential and high capacity, which may improve the performance and energy density of the lithium secondary batteries.

When lithium metal is used as an anode material, lithium dendrites may form on the surface of the lithium metal during charging, thereby leading to a short circuit, overheating, and explosion of the electrode. In addition, the electrode volume may repeatedly expand and contract during the deposition and stripping of lithium on the lithium metal surface, potentially reducing the stability of the lithium secondary battery.

To suppress changes in electrode volume, lithium metal may be electrodeposited within a storage body having a multidimensional structure. However, due to the high specific surface area of the storage body, irreversible consumption of electrolyte and lithium may increase, and the capacity and cycle life characteristics of the lithium secondary battery may be degraded.

### [SUMMARY OF THE INVENTION]

An object of the present disclosure is to provide an electrode for a lithium secondary battery.

Another object of the present disclosure is to provide a lithium secondary battery.

Still another object of the present disclosure is to provide a method for preparing an electrode for a lithium secondary battery.

An electrode for a lithium secondary battery according to embodiments of the present disclosure includes: a lithium metal layer; and a coating layer disposed on at least one surface of the lithium metal layer and including lithium acetylide.

In the electrode for a lithium secondary battery according to embodiments of the present disclosure, the coating layer including the lithium acetylide may further include lithium fluoride (LiF) or lithium nitride (Li₃N).

The electrode for a lithium secondary battery according to embodiments of the present disclosure may include lithium acetylide represented by Formula 1 below.

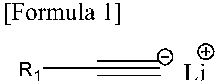

In Formula 1, R₁ is a substituted or unsubstituted aromatic ring.

The electrode for a lithium secondary battery according to embodiments of the present disclosure may include lithium acetylide represented by Formula 1-1 below.

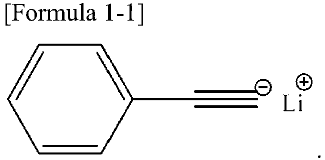

According to embodiments of the present disclosure, the coating layer may have a thickness of 0.1 µm to 1 µm.

According to embodiments of the present disclosure, a ratio of a peak area corresponding to a Li-C bond relative to a peak area corresponding to a C-C bond in the coating layer, as determined by XPS analysis, may be 0.3 to 0.85.

According to embodiments of the present disclosure, the coating layer may exhibit, as determined by XPS analysis, a peak value at 282 eV to 283 eV.

A lithium secondary battery according to embodiments of the present disclosure includes the electrode for a lithium secondary battery.

According to embodiments of the present disclosure, the electrode may be an anode for a lithium secondary battery.

According to embodiments of the present disclosure, the lithium secondary battery may further include a cathode including a lithium-nickel metal oxide containing 80 mol% or more of nickel based on the total molar amount of elements excluding oxygen.

According to embodiments of the present disclosure, the lithium secondary battery may further include a sulfide-based solid electrolyte.

A method for preparing an electrode for a lithium secondary battery according to embodiments of the present disclosure includes: preparing a lithium metal layer; dropping an acetylene derivative onto at least one surface of the lithium metal layer; and drying the lithium metal layer onto which the acetylene derivative has been dropped.

According to embodiments of the present disclosure, the acetylene derivative may include a compound represented by Formula 2 below.

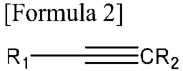

In Formula 2, R₁ is a substituted or unsubstituted aromatic ring, R₂ is hydrogen, a halogen group, or -SiRR'R", and R, R' and R" are each independently a substituted or unsubstituted C₁-C₃₀ alkyl group.

According to embodiments of the present disclosure, Formula 2 may be represented by Formula 3 below.

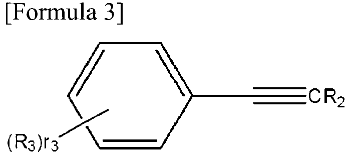

In Formula 3, R₃ is hydrogen, fluorine, -NO₂, or -OR_{f}, R_{f} is a C₁-C₃₀ alkyl group substituted with fluorine, r₃ is an integer of 1 to 5, and if r₃ is 2 or more, a plurality of R₃s are the same or different from each other, and R₂ is hydrogen, a halogen group, or -SiRR'R", and R, R' and R" are each independently substituted or unsubstituted C₁-C₃₀ alkyl groups.

According to embodiments of the present disclosure, Formula 2 may be represented by any one of Formulas 2-1 to 2-3 below:

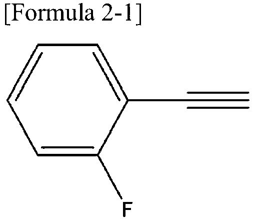

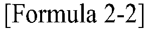

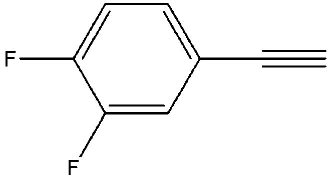

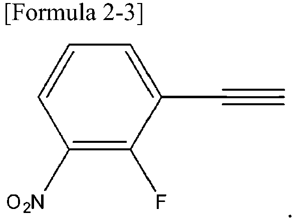

The electrode for a lithium secondary battery according to the embodiments of the present disclosure includes a coating layer including lithium acetylide on the lithium metal layer, thereby suppressing non-uniform deposition of lithium and the growth of lithium dendrites. Accordingly, the stability and electrical characteristics of the lithium secondary battery may be improved.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a graph illustrating the XPS analysis results of metal coating layers for a lithium secondary battery according to Examples 1 to 3 and Comparative Examples 1 to 3;
FIG. 2 is a graph illustrating the discharge capacity of the lithium secondary batteries according to Example 1 and Comparative Example 3;
FIG. 3 is a graph illustrating the Coulombic efficiency of the lithium secondary batteries according to Example 1 and Comparative Example 3;
FIG. 4 is an SEM image of a cross-section of an electrode assembly for a lithium secondary battery according to Example 1; and
FIG. 5 is an SEM image of the electrolyte surface in the electrode assembly for a lithium secondary battery according to Comparative Example 1.

### [DETAILED DESCRIPTION OF THE INVENTION]

Embodiments of the present disclosure provide an electrode for a lithium secondary battery including a lithium metal layer and a coating layer disposed on at least one surface of the lithium metal layer and including lithium acetylide.

Hereinafter, embodiments of the present invention will be described in detail with reference to the drawings.

The terms "upper portion," "lower portion," "upper surface," "lower surface," "bottom surface," "one surface," and the like as used herein indicate the relative positions of respective components and do not imply absolute positional relationships.

Unless otherwise specifically defined herein, when a portion such as a layer, film, thin film, region, or plate, etc. is present "on" or "above" another portion, it may include not only the case where the portion is present "directly on" the other portion, but also the case where another portion is present between them.

The term "substituted or unsubstituted" as used herein may refer to a group in which an atom is substituted or unsubstituted with one or more substituents selected from the group consisting of, for example, a deuterium atom, a halogen atom, a cyano group, a nitro group, an amino group, a silyl group, an oxy group, a thio group, a sulfinyl group, a sulfonyl group, a carbonyl group, an ester group, boron, a phosphine oxide group, a phosphine sulfide group, an alkyl group (e.g., a C₁-C₆₀, or a C₁-C₁₀ alkyl group), an alkenyl group (e.g., a C₂-C₆₀, or a C₂-C₁₀ alkenyl group), an alkynyl group (e.g., a C₂-C₆₀, or a C₂-C₁₀ alkynyl group), an alkoxy group (e.g., a C₁-C₆₀, or a C₁-C₁₀ alkoxy group), a hydrocarbon ring group, an aryl group (e.g., a C₆-C₆₀ aryl group), and a heterocyclic group (e.g., a C₁-C₆₀ heterocyclic group). For example, a "substituted alkyl group" may refer to a group in which at least one hydrogen atom of the alkyl group is substituted with the above-described substituent, thereby allowing a substituent to be further bound to a carbon atom of the alkyl group.

The substituent may include a combination of groups selected from those described above. For example, at least one hydrogen atom of the alkyl group, aryl group, etc. included as a substituent may be substituted with a deuterium atom, a halogen atom, a cyano group, a nitro group, an amino group, a silyl group, an oxy group, a thio group, a sulfinyl group, a sulfonyl group, a carbonyl group, an ester group, boron group, a phosphine oxide group, a phosphine sulfide group, an alkyl group, an alkenyl group, an alkynyl group, a hydrocarbon ring group, an aryl group, or a heterocyclic group.

Among the substituents, multivalent substituents such as an amino group, a phosphine sulfide group, a phosphine oxide group, a sulfinyl group, a sulfonyl group, an oxy group, a carbonyl group, and an ester group may be substituted with a C₁-C₁₀ alkyl group, a C₁-C₁₀ alkenyl group, a C₁-C₁₀ alkynyl group, or a C₆-C₁₀ aryl group.

In the term "substituted or unsubstituted Y group of Cₐ-C_{b}" as used herein, Cₐ-C_{b} refers to the number of carbon atoms in the Y group in its unsubstituted state, and does not include the number of carbon atoms in any substituent.

The term "alkyl group" may refer to a monovalent hydrocarbon group derived from a straight-chain or branched-chain hydrocarbon by the removal of one hydrogen atom. For example, the alkyl group may include a methyl group, an ethyl group, a propyl group, a sec-butyl group, a tert-butyl group, an iso-butyl group, a pentyl group, a neopentyl group, a 2-ethylbutyl group, a 3,3-dimethylbutyl group, a hexyl group, a heptyl group, an octyl group, etc.

The term "alkylene group" may refer to a divalent hydrocarbon group derived from a straight-chain or branched-chain hydrocarbon by the removal of two hydrogen atoms.

The term "alkenyl group" may refer to a monovalent hydrocarbon group having the same carbon backbone as the above-described alkyl group and including at least one carbon-carbon double bond. The term "alkenylene group" may refer to a divalent hydrocarbon group derived from the above-described alkenyl group group by the removal of one additional hydrogen atom.

The term "alkynyl group" may refer to a monovalent hydrocarbon group having the same carbon backbone as the above-described alkyl group and including at least one carbon-carbon triple bond. The term "alkynylene group" may refer to a divalent hydrocarbon group derived from the above-described alkynyl group by the removal of one additional hydrogen atom.

The term "aryl group" may refer to a monovalent hydrocarbon group derived from a hydrocarbon group having an aromatic structure by the removal of one hydrogen atom. The aryl group may include a group in which a plurality of aromatic rings are directly linked, such as a biphenyl group. The aryl group may include, for example, a phenyl group, a naphthyl group, an anthracenyl group, a phenanthrenyl group, a fluorenyl group, a tetracenyl group, a biphenyl group, a terphenyl group, a quaterphenyl group, a pyrenyl group, a chrysenyl group, etc.

A group in which two or more aryl rings are fused or linked via an alicyclic hydrocarbon ring, such as a fluorenyl group, is also included in the category of aryl groups.

For example, a biphenyl group may be interpreted either as an aryl group or as a phenyl group substituted with another phenyl group.

The term "arylene group" may refer to a divalent hydrocarbon group derived from an aryl group by the removal of two hydrogen atoms.

The term "heteroaryl group" may refer to a monovalent group having an aromatic structure and including a hetero atom such as B, O, P, S and Si as at least one of the atoms forming a ring. The term "heteroarylene group" may refer to a divalent group having an aromatic structure and including a hetero atom such as B, O, P, S and Si as at least one of the atoms forming a ring. When a heteroaryl group or a heteroarylene group includes two or more hetero atoms, the two or more hetero atoms may be the same or different from each other.

A structure in which two or more aryl rings, such as a carbazole group, are fused or linked via a non-aromatic heterocycle is also included in the category of heteroaryl groups.

For example, the term "cyclic structure" may be used to refer to both monocyclic and polycyclic structures, as well as alicyclic and aromatic rings.

The term "polycyclic structure" may refer to a structure in which two or more rings are linked via one or more atoms. For example, the polycyclic structure may include a bicyclic structure, a spiro structure, a fused structure, etc. through bridging carbon atoms.

The term "fused structure" or "fused ring structure" may refer to a structure in which two or more adjacent rings among the above-described polycyclic structures share two or more atoms. Examples of the fused ring structure may include naphthalene, anthracene, phenanthrene, fluorene, pyrene, benzopyrene, pentacene, polyacene, helicene, and the like.

A "carbocyclic group (e.g., C₃-C₆₀ carbocyclic group)" refers to a cyclic group in which ring-forming atoms are composed of carbon atoms. A heterocyclic group (e.g., a C₁-C₆₀ heterocyclic group) refers to a cyclic group that further includes a hetero atom as a ring-forming atom in addition to carbon.

Each of the carbocyclic group and the heterocyclic group may be a monocyclic group consisting of one ring or a polycyclic group in which two or more rings are fused together.

The "aromatic ring" may include the above-described aryl group or heteroaryl group.

The "acetylide" may refer to an anionic substituent (-C≡C-) generated by removal of a hydrogen atom from acetylene (C₂H₂).

When lithium metal is applied to a lithium secondary battery, continuous side reactions with the electrolyte may occur due to its high reactivity. Consequently, side reactions may occur on the lithium metal, forming an unstable film and degrading cycle life characteristics. In addition, lithium dendrites may form when charging a lithium secondary battery including the lithium metal. These lithium dendrites not only significantly reduce the Coulombic efficiency of the lithium secondary battery but also cause safety issues, such as fire and explosion, by causing a sudden internal short circuit.

The electrode for a lithium secondary battery according to the embodiments of the present disclosure includes a coating layer including lithium acetylide disposed on at least one surface of a lithium metal layer, thereby forming a stable solid electrolyte interphase (SEI) film and ensuring electrochemical stability and excellent ionic conductivity of the lithium secondary battery.

Specifically, the lithium acetylide contained in the coating layer may induce a uniform distribution of lithium ions by providing a pathway for lithium ion migration, thereby inhibiting the growth of lithium dendrites.

According to exemplary embodiments, the lithium metal layer may be a lithium metal plate and may be used as an active material of the electrode for a lithium secondary battery. For example, the electrodeposition and stripping reactions of lithium metal, rather than the oxidation and reduction reactions of the electrode active material during charging and discharging, may be the main reversible reaction of the lithium secondary battery. In one embodiment, the lithium secondary battery may be provided as a lithium metal battery. The lithium metal plate may be a lithium foil.

By using lithium metal particles, a lithium storage layer in which lithium metal is inserted may be formed without an initial electrodeposition or melting process of the lithium metal. Accordingly, the preparation process of a high-density electrode layer may be simplified, and economic feasibility and efficiency may be improved.

For example, when lithium metal is inserted into a lithium metal layer using electrochemical deposition, uniform deposition of the lithium metal may be difficult, which may result in a decrease in the density of the electrode layer. In addition, when a lithium metal ingot is melted and inserted into the lithium metal layer, a high heat treatment temperature is required, which may reduce economic feasibility and efficiency.

In some embodiments, the lithium metal layer may be formed on at least one surface of an electrode current collector.

The electrode current collector may include gold, stainless steel, nickel, aluminum, iron, titanium, copper, or an alloy thereof, and may include, for example, copper or a copper alloy.

Lithium metal may grow within the lithium metal layer during the charging and discharging of the lithium secondary battery. Lithium metal has a low reaction potential and high reversible capacity, which may improve the output characteristics and energy density of the lithium secondary battery.

Accordingly, the growth of lithium dendrites or lithium ion crystals may be suppressed. For example, lithium dendrites or lithium ion crystals have low conductivity, which may easily cause loss of electrical contact, and the capacity and energy density of the lithium secondary battery may be reduced.

According to exemplary embodiments, the coating layer including lithium acetylide may serve as a protective layer disposed on at least one surface of the lithium metal layer. According to some embodiments, the coating layer including lithium acetylide may further include lithium fluoride (LiF) or lithium nitride (Li₃N). According to some embodiments, the coating layer including lithium acetylide may further include lithium fluoride. By further including lithium fluoride (LiF) or lithium nitride (Li₃N), the coating layer may form a stable SEI film and also improve the electrochemical stability and ionic conductivity of the lithium secondary battery.

According to exemplary embodiments, the lithium acetylide may be represented by Formula 1 below.

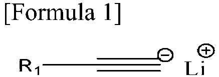

In Formula 1, R₁ is a substituted or unsubstituted aromatic ring.

According to exemplary embodiments, R₁ may be a substituted or unsubstituted aryl group or a substituted or unsubstituted heteroaryl group.

According to exemplary embodiments, R₁ may be a substituted or unsubstituted C₆-C₃₀ aryl group or a substituted or unsubstituted C₂-C₃₀ heteroaryl group.

According to exemplary embodiments, R₁ may be a substituted or unsubstituted C₆-C₂₀ aryl group or a substituted or unsubstituted C₂-C₂₀ heteroaryl group.

According to exemplary embodiments, R₁ may be a substituted or unsubstituted C₆-C₁₂ aryl group or a substituted or unsubstituted C₂-C₁₀ heteroaryl group.

According to exemplary embodiments, R₁ may be a substituted or unsubstituted phenyl group, a substituted or unsubstituted tolyl group, a substituted or unsubstituted xylyl group, a substituted or unsubstituted mesityl group, a substituted or unsubstituted biphenyl group, or a substituted or unsubstituted naphthyl group.

According to exemplary embodiments, R₁ may be a substituted or unsubstituted pyridyl group, a substituted or unsubstituted furanyl group, a substituted or unsubstituted thiophenyl group, a substituted or unsubstituted pyrimidinyl group, a substituted or unsubstituted indolyl group, a substituted or unsubstituted quinolinyl group, or a substituted or unsubstituted isoquinolyl group.

According to exemplary embodiments, R₁ may be a phenyl group, a tolyl group, a xylyl group, a mesethyl group, a biphenyl group, or a naphthyl group.

According to exemplary embodiments, R₁ may be a pyridyl group, a furanyl group, a thiophenyl group, a pyrimidinyl group, an indolyl group, a quinolinyl group, or an isoquinolyl group.

According to exemplary embodiments, R₁ may be a phenyl group.

According to exemplary embodiments, Formula 1 may be represented by Formula 1-1 below.

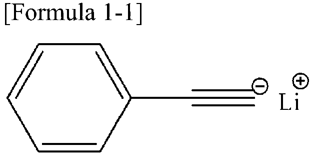

According to exemplary embodiments, the coating layer may have a thickness of 0.1 µm to 1 µm. For example, the thickness of the coating layer may be 0.1 µm to 0.9 µm, 0.2 µm to 0.8 µm, 0.2 µm to 0.7 µm, or 0.3 µm to 0.6 µm.

When the thickness of the coating layer satisfies the above range, side reactions between the lithium metal layer and the electrolyte may be suppressed, thereby improving the performance of the lithium secondary battery.

According to exemplary embodiments, a ratio of a peak area corresponding to a Li-C bond relative to a peak area corresponding to a C-C bond in the coating layer, as determined by XPS analysis, may be 0.3 to 0.85. For example, a peak area ratio of a Li-C bond relative to a C-C bond in the coating layer may be 0.31 to 0.84, 0.32 to 0.83, 0.33 to 0.82, or 0.34 to 0.82.

When the peak area ratio of the Li-C bond relative to the C-C bondt satisfies the above range, the stability and cycle performance of the lithium secondary battery may be improved by protecting the surface of the lithium metal layer and suppressing the growth of lithium dendrites.

According to exemplary embodiments, the lithium metal layer may have a thickness of 0.1 µm to 100 µm. For example, the thickness of the lithium metal layer may be 0.5 µm to 80 µm, 1 µm to 70 µm, 5 µm to 50 µm, 10 µm to 30 µm, or 15 µm to 25 µm.

When the thickness of the lithium metal layer satisfies the above range, this layer may adequately function as an active material for the electrode, and the lithium metal density may be improved, thereby improving the electrochemical performance of the lithium secondary battery.

According to exemplary embodiments, as a result of the XPS analysis, the coating layer may exhibit a peak value at 282 eV to 283 eV. For example, the peak value may be 282.1 eV to 282.9 eV, 282.1 eV to 282.8 eV, 282.1 eV to 282.7 eV, 282.1 eV to 282.6 eV, 282.1 eV to 282.5 eV, 282.1 eV to 282.4 eV, or 282.1 eV to 282.3 eV. When the coating layer satisfies the above peak range, it may be confirmed that the coating layer contains lithium acetylide, and specifically, that it contains an acetylide group.

According to exemplary embodiments, the coating layer may exhibit, as determined by XPS analysis, a peak value at 284 eV to 285 eV. For example, the peak value may be 284.1 eV to 284.9 eV, 284.2 eV to 284.8 eV, 284.3 eV to 284.7 eV, or 284.4 eV to 284.6 eV. When the coating layer satisfies the above peak range, it may be confirmed that the coating layer contains a phenyl group.

The XPS analysis may be performed by loading a sample into an XPS analysis holder inside a glove box in an argon atmosphere, removing the XPS analysis holder from the glove box, attaching the XPS analysis holder to the XPS instrument chamber within a few seconds, and then analyzing it in an argon atmosphere.

As a non-limiting example, the XPS analysis conditions may be as follows.
1) X-ray type: Al Kα, Source energy: 1486.68 eV, Beam size: 900 µm
2) Analyzer: CAE mode
3) Number of scans: 2 (survey scan), 20 (narrow scan)
4) Pass energy: 150 eV (survey scan), 20 eV (narrow scan)
5) Ion gun: Ar ion
6) Ion energy: 4000 eV
7) Ion current: High
8) Raster size: 3 mm
9) Etch cycle time: 5 sec
10) Total etch levels: 31

Each of the above-described peak areas may be calculated by integrating the peak fitting (deconvolution) results of the XPS spectrum. The peak fitting may be performed using commercially available XPS analysis software, and may be performed, for example, using CasaXPS, Avantage, or equivalent XPS analysis software, but is not limited thereto.

According to exemplary embodiments, the lithium secondary battery may include the electrode for a lithium secondary battery.

The lithium secondary battery according to embodiments may include the electrode for a lithium secondary battery according to the above-described embodiments and a counter electrode disposed opposite the electrode for a lithium secondary battery.

According to exemplary embodiments, the electrode may be an anode for a lithium secondary battery.

According to exemplary embodiments, the counter electrode may be a cathode.

According to exemplary embodiments, the cathode may include a cathode current collector and a cathode active material layer formed on the cathode current collector.

For example, a cathode slurry may be prepared by mixing a cathode active material with a cathode binder, a conductive material, and/or a dispersant in a solvent, followed by stirring. The cathode slurry may be coated on at least one surface of the cathode current collector, followed by drying and roll-pressing to prepare the cathode.

According to exemplary embodiments, a cathode may be prepared by mixing and press-molding the cathode active material, the sulfide-based solid electrolyte, and the conductive material.

The cathode current collector may include stainless steel, nickel, aluminum, titanium, or an alloy thereof. The cathode current collector may also include aluminum or stainless steel having a surface treated with carbon, nickel, titanium, or silver.

Examples of the cathode active material may include one or more compounds selected from a lithium iron phosphate compound, a lithium cobalt oxide, a lithium manganese oxide, a lithium nickel oxide, or a lithium composite oxide. For example, the cathode active material may include a layered compound such as lithium cobalt oxide (LiCoO₂) or lithium nickel oxide (LiNiO₂), or a lithium manganese oxide such as LiMnO₃, LiMn₂O₃, and LiMnO₂; a lithium copper oxide (Li₂CuO₂); a vanadium oxide such as LiV₃O₈, LiFe₃O₄, V₂O₅, and Cu₂VO₇; or a lithium iron phosphate oxide such as LiFePO₄.

In one embodiment, the cathode active material may include a compound represented by Formula A below.

[Formula A] LiₐNi_{b}M_{1-b}O₂

In Formula A, a and b may satisfy 0.95≤a≤1.08, and b≥0.5, and M may be at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In one embodiment, the cathode active material includes nickel (Ni) and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it may be disadvantageous in terms of mechanical and electrical stability.

According to exemplary embodiments, the lithium secondary battery may include a cathode including a lithium-nickel metal oxide containing 80 mol% or more of nickel based on the total molar amount of elements excluding oxygen.

In exemplary embodiments, the lithium-nickel metal oxide may contain nickel in an amount of 80 mol% or more and 90 mol% or less, 81 mol% or more and 89 mol% or less, 82 mol% or more and 88 mol% or less, or 82 mol% or more and 85 mol% or less based on the total molar amount of elements excluding oxygen. When the lithium-nickel metal oxide contains nickel within the above-described range, the capacity and output of the lithium secondary battery may be improved while preventing a decrease in the cycle life of the lithium secondary battery and maintaining mechanical and electrical stability.

In one embodiment, the conductivity or resistance of the lithium secondary battery may be improved by cobalt (Co), as well as the mechanical and electrical stability of the lithium secondary battery may be improved by manganese (Mn).

The chemical structure represented by Formula A indicates a bonding relationship among elements included in the lattice structure or the crystal structure of the cathode active material and does not exclude the presence of additional elements. For example, M may serve as a main active element of the cathode active material. Formula A is provided to represent the bonding relationship among the main active elements and should be understood as encompassing the introduction or substitution of additional elements.

In one embodiment, the cathode active material may further include auxiliary elements which are added to the main active elements, in order to enhance chemical stability thereof or the crystal structure. The auxiliary element may be incorporated into the crystal structure to form bonds therewith, and it should be understood that such a case is also included within the scope of the chemical structure represented by Formula A.

As the cathode binder, materials that are substantially the same as or similar to those described for the electrode for a lithium secondary battery may be used. In one embodiment, a PVDF-based binder may be used as the cathode binder.

The conductive material may include graphite, carbon black, graphene, carbon nanotubes, tin, tin oxide, titanium oxide, and perovskite materials such as LaSrCoO₃, and LaSrMnO₃

In exemplary embodiments, the lithium secondary battery may further include a sulfide-based solid electrolyte.

The sulfide-based electrolyte may exhibit high compatibility with lithium metal and metal-containing particles, thereby further improving the output characteristics of the electrode for a lithium secondary battery.

In one embodiment, the sulfide-based electrolyte may be represented by Formula B below.

[Formula B] Li_{c}Q_{f}P_{g}SₕZᵢ

In Formula B, e may satisfy 0 < e < 12, f may satisfy 0 ≤ f ≤ 6, g may satisfy 0 ≤ g ≤ 6, h may satisfy 0 < h ≤ 12, i may satisfy 0 ≤ i ≤ 9, Q may be at least one element selected from the group consisting of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and Z may be at least one element selected from the group consisting of F, Cl, Br and I.

For example, the sulfide-based electrolyte may be an LPS-based solid electrolyte including Li, P, and S, an LGPS-based solid electrolyte including Li, P, Ge, and S, or an LSiPSCl-based solid electrolyte including Li, Si, P, S, and Cl.

For example, as the sulfide-based electrolyte, Li₂S-P₂S₅, Li₁₀GeP₂S₁₂, Li₁₀SnP₂S₁₂, Li_{9.54}Si_{1.74}P_{1.44}S_{11.7}Cl_{0.3}, Li₁₀(Si_{0.5}Ge_{0.5})P₂S₁₂, Li₁₀(Ge_{0.5}Sn_{0.5})P₂S₁₂, Li₁₀(Si_{0.5}Sn_{0.5})P₂S₁₂, Li₁₀GeP₂S_{11.7}O_{0.3}, Li_{9.6}P₃S₁₂, Li₉P₃S₉O₃, Li_{10.35}Ge_{1.35}P_{1.65}S₁₂, Li_{10.35}Si_{1.35}P_{1.65}S₁₂, Li_{9.81}Sn_{0.81}P_{2.19}S₁₂, Li_{9.42}Si_{1.02}P_{2.1}S_{9.96}O_{2.04}, Li₆PS₅Cl, etc. may be used.

According to exemplary embodiments, a method for preparing an electrode for a lithium secondary battery may include: preparing a lithium metal layer; dropping an acetylene derivative onto at least one surface of the lithium metal layer; and drying the lithium metal layer onto which the acetylene derivative has been dropped.

According to exemplary embodiments, the step of preparing the lithium metal layer may include preparing the above-described lithium foil.

According to exemplary embodiments, the acetylene derivative may include a compound represented by Formula 2 below.

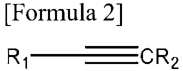

In Formula 2, R₁ is a substituted or unsubstituted aromatic ring, R₂ is hydrogen, a halogen group, or -SiRR'R", and R, R' and R" are each independently a substituted or unsubstituted C₁-C₃₀ alkyl group.

According to exemplary embodiments, in Formula 2, R₁ may be defined in accordance with the above-described description for R₁ in Formula 1.

According to exemplary embodiments, Formula 2 may be represented by Formula 3 below.

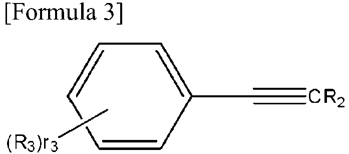

In Formula 3, R₃ is hydrogen, fluorine, -NO₂, or -OR_{f}, R_{f} is a C₁-C₃₀ alkyl group substituted with fluorine, r₃ is an integer of 1 to 5, and if r₃ is 2 or more, a plurality of R₃s are the same or different from each other, R₂ is hydrogen, a halogen group, or -SiRR'R", and R, R' and R" are each independently substituted or unsubstituted C₁-C₃₀ alkyl groups.

According to exemplary embodiments, R₃ is hydrogen, fluorine, -NO₂, or -OR_{f}, and R_{f} may be a C₁-C₂₀ alkyl group substituted with fluorine.

According to exemplary embodiments, R₃ is hydrogen, fluorine, -NO₂, or -OR_{f}, and R_{f} may be a C₁-C₁₀ alkyl group substituted with fluorine.

According to exemplary embodiments, R₃ is hydrogen, fluorine, -NO₂, or -OR_{f}, and R_{f} may be a methyl group substituted with fluorine.

According to exemplary embodiments, R_{f} may be a difluoromethyl group or a trifluoromethyl group.

According to exemplary embodiments, R₂ may be hydrogen, a halogen group, or - SiRR'R", and R, R', and R" may each be independently a substituted or unsubstituted C₁-C₂₀ alkyl group.

According to exemplary embodiments, R₂ may be hydrogen, a halogen group, or - SiRR'R", and R, R', and R" may each be independently a substituted or unsubstituted C₁-C₁₀ alkyl group.

According to exemplary embodiments, R₂ may be hydrogen, a halogen group, or - SiRR'R", and R, R', and R" may each be independently a substituted or unsubstituted methyl group.

According to exemplary embodiments, R₂ may be hydrogen, a halogen group, or - SiRR'R", and R, R' and R" may be methyl groups.

According to exemplary embodiments, Formula 2 may be represented by any one of Formulas 2-1 to 2-3 below.

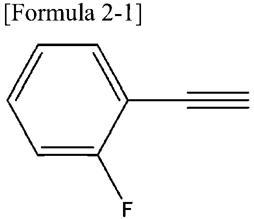

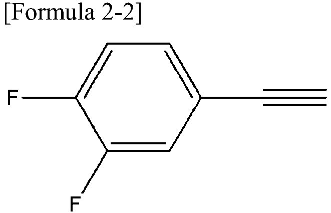

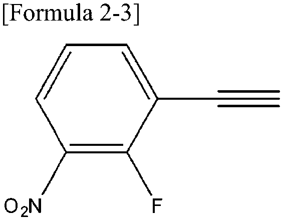

According to exemplary embodiments, in the step of dropping an acetylene derivative onto at least one surface of the lithium metal layer, for the dropping method, a slot die coating method or a drop coating method may be applied, and specifically, the drop coating method may be applied. For example, the step of dropping the acetylene derivative may include coating the acetylene derivative onto at least one surface of the lithium metal layer.

According to exemplary embodiments, the step of dropping an acetylene derivative onto at least one surface of the lithium metal layer may include dropping the acetylene derivative onto at least one surface of the lithium metal layer and allowing the same to react for about 2 minutes to 10 minutes.

According to exemplary embodiments, the step of drying the lithium metal layer onto which the acetylene derivative has been dropped may include drying the lithium metal layer onto which the acetylene derivative has been dropped for about 30 minutes to 2 hours.

According to exemplary embodiments, the method for manufacturing a lithium secondary battery may include the method for preparing an electrode for a lithium secondary battery.

The method for manufacturing a lithium secondary battery may include preparing the sulfide-based solid electrolyte; preparing the cathode; laminating the cathode/solid electrolyte/anode in sequence to form a laminate using the electrode for a lithium secondary battery as the anode; and press-molding the laminate.

For the press molding, a press forming method may be applied.

For example, after pressing the laminate, additional press-molding may be performed.

According to exemplary embodiments, the additional press-molding may be performed at a pressure of 50 MPa to 60 MPa.

According to exemplary embodiments, the electrode for a lithium secondary battery, the counter electrode, and a separator may be repeatedly arranged to form an electrode assembly. In some embodiments, the electrode assembly may be a winding type, a stacking type, a z-folding type, or a stacked-folding type.

The electrode assembly may be accommodated in a case to define a lithium secondary battery. The lithium secondary battery may be manufactured, for example, in a cylindrical, prismatic, pouch, or coin type using a can.

In some embodiments, a solid electrolyte layer may be interposed between the electrode for a lithium secondary battery and the counter electrode. The solid electrolyte layer may be a sulfide-based electrolyte.

In this case, the lithium secondary battery may not include a separator or an electrolyte. The solid electrolyte layer may substantially function as a separator and may prevent a short circuit between the electrode for a lithium secondary battery and the counter electrode. In addition, the solid electrolyte layer may allow lithium ions to migrate between the counter electrode and the electrode for a lithium secondary battery.

The lithium secondary battery according to the embodiments of the present disclosure may be widely applied in green technology fields including electric vehicles, battery charging stations, and renewable energy systems using batteries, such as photovoltaics and wind power generation. In addition, the lithium secondary battery according to the embodiments of the present disclosure may be used in eco-friendly electric vehicles and hybrid vehicles to suppress air pollution and greenhouse gas emissions, thereby contributing to mitigating climate change.

The invention is also defined by the following aspects:
Aspect 1. An electrode for a lithium secondary battery comprising:
   a lithium metal layer; and
   a coating layer disposed on at least one surface of the lithium metal layer and including lithium acetylide.
Aspect 2. The electrode for a lithium secondary battery according to aspect 1, wherein the coating layer containing the lithium acetylide further comprises lithium fluoride (LiF) or lithium nitride (Li₃N).
Aspect 3. The electrode for a lithium secondary battery according to aspects 1 or 2, wherein the lithium acetylide is represented by Formula 1 below: 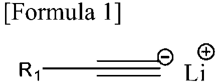 Wherein in Formula 1, R₁ is a substituted or unsubstituted aromatic ring.
Aspect 4. The electrode for a lithium secondary battery according to aspect 3, wherein Formula 1 is represented by Formula 1-1 below: 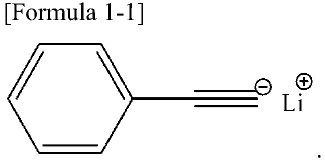
Aspect 5. The electrode for a lithium secondary battery according to any one of aspects 1 to 4, wherein the coating layer has a thickness of 0.1 µm to 1 µm.
Aspect 6. The electrode for a lithium secondary battery according to any one of aspects 1 to 5, wherein a ratio of a peak area corresponding to a Li-C bond relative to a peak area corresponding to a C-C bond in the coating layer, as determined by XPS analysis, is 0.3 to 0.85.
Aspect 7. The electrode for a lithium secondary battery according to any one of aspects 1 to 6, wherein the coating layer exhibits, as determined by XPS analysis, a peak value at 282 eV to 283 eV.
Aspect 8. A lithium secondary battery comprising an electrode for a lithium secondary battery according to any one of aspects 1 to 7.
Aspect 9. The lithium secondary battery according to aspect 8, wherein the electrode is an anode for a lithium secondary battery.
Aspect 10. The lithium secondary battery according to aspects 8 or 9, further comprising a cathode comprising a lithium-nickel metal oxide including 80 mol% or more of nickel based on the total molar amount of elements excluding oxygen.
Aspect 11. The lithium secondary battery according to any one of aspects 8 to 10, further comprising a sulfide-based solid electrolyte.
Aspect 12. A method for preparing an electrode for a lithium secondary battery comprising:
   preparing a lithium metal layer;
   dropping an acetylene derivative onto at least one surface of the lithium metal layer; and
   drying the lithium metal layer onto which the acetylene derivative has been dropped.
Aspect 13. The method for preparing an electrode for a lithium secondary battery according to aspect 12, wherein the acetylene derivative comprises a compound represented by Formula 2 below: 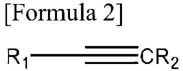 wherein in Formula 2, R₁ is a substituted or unsubstituted aromatic ring, R₂ is hydrogen, a halogen group, or -SiRR'R", and R, R' and R" are each independently a substituted or unsubstituted C₁-C₃₀ alkyl group.
Aspect 14. The method for preparing an electrode for a lithium secondary battery according to aspect 13, wherein Formula 2 is represented by Formula 3 below: 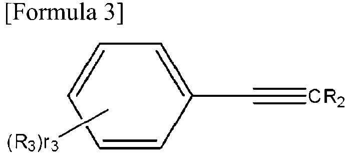
   wherein in Formula 3, R₃ is hydrogen, fluorine, -NO₂, or -OR_{f}, R_{f} is a C₁-C₃₀ alkyl group substituted with fluorine, r₃ is an integer of 1 to 5, and if r₃ is 2 or more, a plurality of R₃s are the same or different from each other, and
   R₂ is hydrogen, a halogen group, or -SiRR'R", and R, R' and R" are each independently substituted or unsubstituted C₁-C₃₀ alkyl groups.
Aspect 15. The method for preparing an electrode for a lithium secondary battery according to aspect 14, wherein Formula 2 is represented by any one of Formulas 2-1 to 2-3 below:

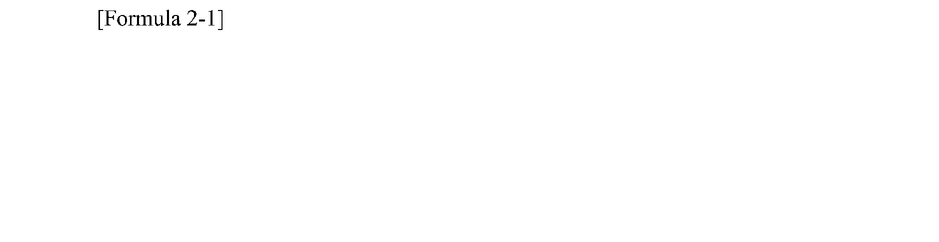

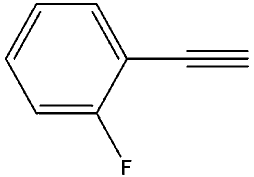

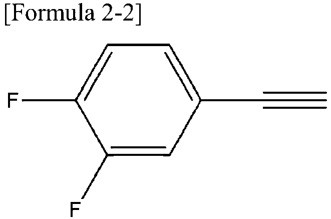

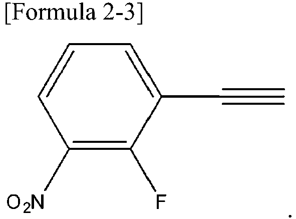

Hereinafter, the embodiments of the present disclosure will be further described with reference to specific experimental examples. The examples and comparative examples included in the experimental examples are merely illustrative of the present disclosure and do not limit the scope of the appended claims.

### Example 1

### (1) Preparation of Electrode for Lithium Secondary Battery

0.5 mg of an acetylene derivative (Sigma-Aldrich) represented by Formula 2-1 below was prepared.

The acetylene derivative was dropped onto a lithium metal surface having a thickness of 20 µm and allowed to react for 2 to 10 minutes. Subsequently, an anode for a lithium secondary battery having a coating layer formed thereon was prepared by drying the same at room temperature for 30 minutes to 2 hours.

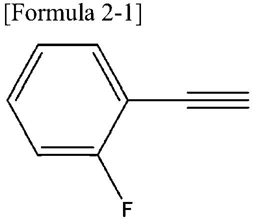

### (2) Manufacture of Lithium Secondary Battery

A sulfide-based solid electrolyte film in the form of a pellet having a thickness of 800 µm was prepared by pressing 100 mg of Li₆PS₅Cl electrolyte powder at a pressure of 200 MPa.

Subsequently, a cathode for a lithium secondary battery was prepared by using LiNi_{0.83}Co_{0.12}Mn_{0.05}O₂ as a cathode active material and pressing 17.37 mg of powder, which was a mixture of 11.8 mg of the cathode active material, 5.06 mg of the sulfide-based solid electrolyte, and 0.51 mg of a conductive material (Super P), at a pressure of 360 MPa.

A sulfide-based all-solid-state lithium secondary battery was manufactured by disposing the sulfide-based solid electrolyte film between the prepared anode and cathode, and applying a final constraining pressure of 60 MPa to 70 MPa to form an electrode assembly.

### Example 2

A lithium secondary battery was manufactured in the same manner as in Example 1, except that an acetylene derivative represented by Formula 2-2 below was used instead of Formula 2-1 above.

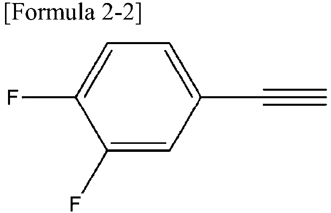

### Example 3

A lithium secondary battery was manufactured in the same manner as in Example 1, except that an acetylene derivative represented by Formula 2-3 below was used instead of Formula 2-1 above.

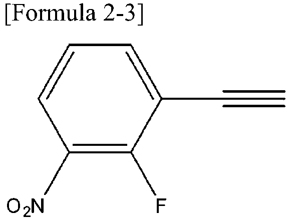

### Comparative Example 1

A lithium secondary battery was manufactured in the same manner as Example 1, except that a compound represented by Formula 3-1 below was used instead of Formula 2-1 above.

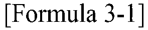

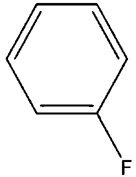

### Comparative Example 2

A lithium secondary battery was manufactured in the same manner as in Example 1, except that a compound represented by Formula 3-2 below was used instead of Formula 2-1 above.

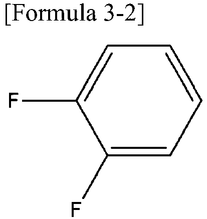

### Comparative Example 3

A lithium secondary battery was manufactured in the same manner as in Example 1, except that a lithium metal (bare Li) without separate surface treatment was used as the anode.

### Experimental Example

### (1) XPS Analysis

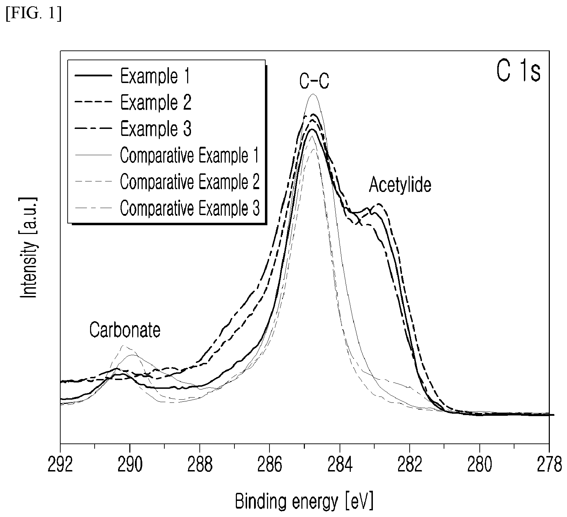

The results of XPS analysis performed on the surfaces of the coating layers included in the anodes for lithium secondary batteries according to Examples 1 to 3 and Comparative Examples 1 to 3 are shown in FIG. 1 and Table 1. Specifically, after loading a sample into an XPS analysis holder inside a glove box in an argon atmosphere, the XPS analysis holder was removed from the glove box, the XPS analysis holder was attached to an XPS instrument chamber within a few seconds, and then analyzed using an ESCALAB 250Xi (Thermo Fisher Scientific) in an argon atmosphere.

The X-ray photoelectron spectroscopy (XPS) analysis conditions are as follows.
1) X-ray type: Al Kα, Source energy: 1486.68 eV, Beam size: 900 µm
2) Analyzer: CAE mode
3) Number of scans: 2 (survey scan), 20 (narrow scan)
4) Pass energy: 150 eV (survey scan), 20 eV (narrow scan)
5) Ion gun: Ar ion
6) Ion energy: 4000 eV
7) Ion current: High
8) Raster size: 3 mm
9) Etch cycle time: 5 sec
10) Total etch levels: 31

Referring to FIG. 1, the XPS analysis graphs according to Examples 1 to 3 show a peak at 282.2 eV, thereby confirming that the coating layers of the anodes according to Examples 1 to 3 include lithium acetylide. On the other hand, the XPS analysis graphs according to Comparative Examples 1 to 3 do not show a peak at 282.2 eV, thereby confirming that the coating layers of the anodes according to Comparative Examples 1 to 3 do not include lithium acetylide.

**[TABLE 1]**

| | **Example 1** | **Example 2** | **Example 3** | **Comparative Example 1** | **Comparative Example 2** | **Comparative Example 3** |
|---|---|---|---|---|---|---|
| **Li-C** | 16864 | 16599 | 9306 | 1445 | 1287 | 3917 |
| **C-C** | 20566 | 22276 | 27192 | 24654 | 17322 | 17781 |
| **Li-C/C-C** | 0.82 | 0.75 | 0.34 | 0.058 | 0.074 | 0.22 |

Referring to Table 1 and FIG. 1, it can be confirmed that, in the coating layers of the anodes according to Examples 1 to 3, a ratio of a peak area corresponding to a Li-C bond relative to a peak area corresponding to a C-C bond satisfies 0.3 to 0.85, while, in the coating layers of the anodes according to Comparative Examples 1 to 3, a ratio of a peak area corresponding to a Li-C bond relative to a peak area corresponding to a C-C bond is less than 0.3. Thus, it is confirmed that the examples include lithium acetylide, since a peak area ratio of a Li-C bond relative to a C-C bond in the coating layers of the anodes according to the examples is higher than that of the comparative examples.

Each of the above-described peak areas was calculated by integrating the peak fitting results of the XPS spectrum.

### (2) SEM Analysis

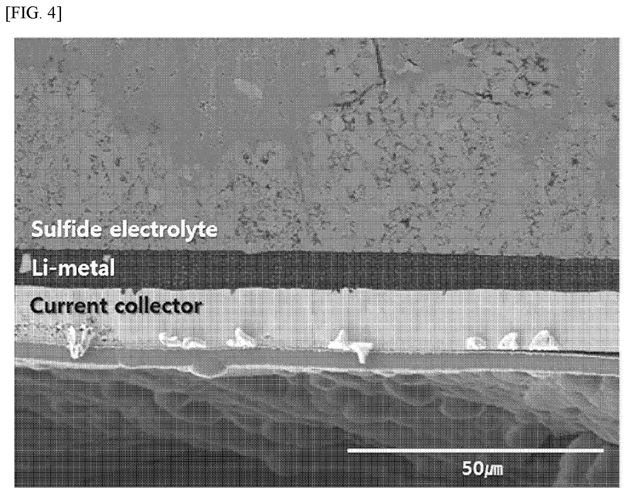

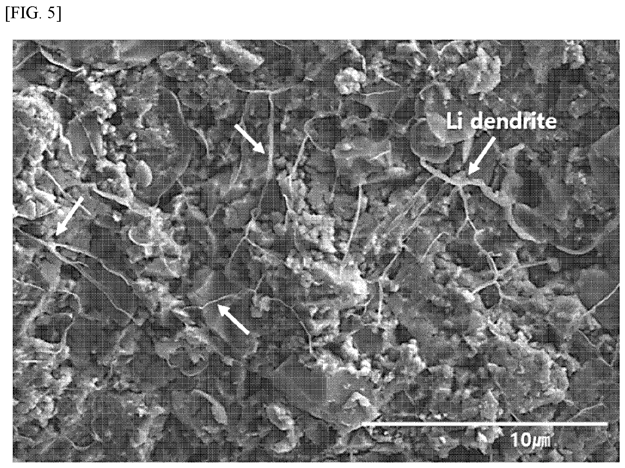

FIG. 4 is an SEM image of a cross-section of the electrode assembly in the lithium secondary battery according to Example 1, and FIG. 5 is an SEM image of an electrolyte surface of the electrode assembly in the lithium secondary battery according to Comparative Example 1.

For Example 1, the cross-section of the electrode assembly was etched using a cryo ion miller, and the etched cross-section was imaged using an SEM device.

Specifically, the electrode assembly sample of Example 1 was loaded into an air-protection holder, the holder was fixed to a cryo ion miller, and a vacuum was formed. Subsequently, the temperature was set to -70 °C, and the cross-sectional pretreatment conditions were set to 3 kV and 6.5 h to pretreat (etch) the cross-section.

Thereafter, the holder loaded with the pretreated sample was fixed to a chamber of a SEM instrument (Hitachi SU8230), and a vacuum was formed. Then, an SEM image of the cross-section of the electrode assembly of Example 1 was captured using a scanning electron microscope under conditions of 5 kV, 14.8 µA, and a magnification of 1000x.

For Comparative Example 1, during the process of extracting the electrolyte sample from the electrode assembly, the electrolyte was damaged by physical pressure, exposing the internal surface, and the exposed electrolyte surface was imaged using the SEM instrument.

Specifically, a sample with an exposed electrolyte surface was loaded into an air-protection holder, the holder was fixed to a chamber of a SEM instrument (Hitachi SU8230), and a vacuum was formed. Subsequently, an SEM image of the electrolyte surface of Comparative Example 1 was captured using a scanning electron microscope under conditions of 5 kV, 21.5 µA, and a magnification of 5000x.

Referring to FIG. 4, in the case of Example 1, lithium dendrites were not substantially observed inside the electrolyte. However, as shown in FIG. 5, a lithium dendrite shape was observed on the electrolyte surface of Comparative Example 1.

### (3) Evaluation of Discharge Capacity

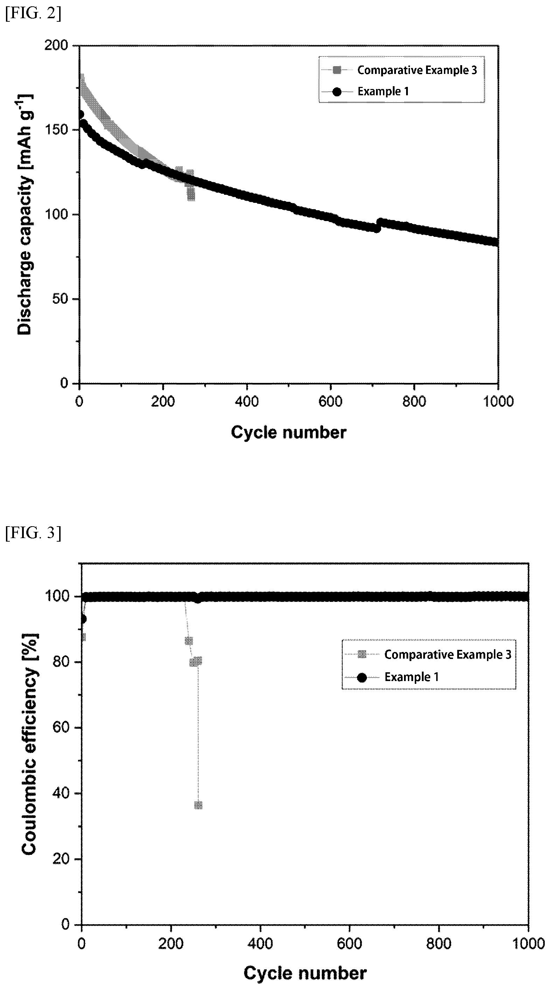

The lithium secondary batteries of Example 1 and Comparative Example 3 were subjected to 0.5C charging and 0.5C discharging in a chamber at 30°C, and the discharge capacity according to the number of cycles was measured. The measurement results are shown in FIG. 2.

Referring to FIG. 2, the lithium secondary battery of Example 1 had a lower initial discharge capacity than the lithium secondary battery of Comparative Example 3, but exhibited improved capacity retention characteristics as the cycles progressed. This is considered to result from suppression of lithium dendrite formation by the coating layer of the anode including lithium acetylide in Example 1, and accordingly, it can be confirmed that excellent long-cycle life characteristics were exhibited without internal short circuits..

### (4) Evaluation of Cycle Life Characteristics

Initial charging and discharging of the lithium secondary batteries according to the Examples and Comparative Examples were performed under a 0.1C condition.

Subsequently, to evaluate the cycle life characteristics, 0.5C charging and 0.5C discharging were performed for 1,000 cycles to check for the occurrence of internal short circuits. Specifically, during the charge-discharge evaluation of the cell, it was confirmed that no internal short circuit occurred when the measured charge graph showed a curve that smoothly reached the upper limit voltage, and it was confirmed that an internal short circuit occurred when the upper limit voltage was not reached or when abnormalcapacity behavior was observed even if the upper limit voltage was reached.

The measurement results are shown in Table 2 below and FIG. 3.

**[TABLE 2]**

| | Cycle life characteristics (Based on 1000 cycles) |
|---|---|
| Example 1 | No internal short circuit observed after 1000 cycles |
| Example 2 | No internal short circuit observed after 972 cycles |
| Example 3 | No internal short circuit observed after 982 cycles |
| Comparative Example 1 | Internal short circuit occurred at 326 cycles |
| Comparative Example 2 | Internal short circuit occurred at 342 cycles |
| Comparative Example 3 | Internal short circuit occurred at 270 cycles |

Referring to Table 2, it was confirmed that the cycle life characteristics of the lithium secondary batteries according to the examples were improved, as no internal short circuit occurred even after 970 cycles or more. It was confirmed that the cycle life characteristics of the lithium secondary batteries according to the comparative examples deteriorated, as an internal short circuit occurred at 350 cycles or less.

In addition, referring to FIG. 3, it was confirmed that the lithium secondary battery according to Example 1 maintained high charge-discharge efficiency over a long period, since no internal short circuit occurred during 1000 cycles.

However, in the lithium secondary battery according to Comparative Example 3, an internal short circuit occurred at 270 cycles, and the charge-discharge efficiency deteriorated due to an overcharging phenomenon caused thereby.

The contents described above are merely examples of applying the principles of the present disclosure, and other configurations may be further included without departing from the scope of the present disclosure.

## Claims

1. An electrode for a lithium secondary battery comprising:
a lithium metal layer; and
a coating layer disposed on at least one surface of the lithium metal layer and including lithium acetylide.

2. The electrode for a lithium secondary battery according to claim 1, wherein the coating layer containing the lithium acetylide further comprises lithium fluoride (LiF) or lithium nitride (Li₃N).

3. The electrode for a lithium secondary battery according to claims 1 or 2, wherein the lithium acetylide is represented by Formula 1 below: 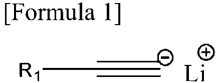 Wherein in Formula 1, R₁ is a substituted or unsubstituted aromatic ring.

4. The electrode for a lithium secondary battery according to claim 3, wherein Formula 1 is represented by Formula 1-1 below:

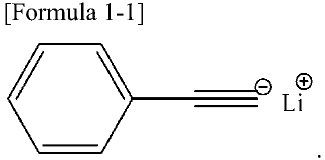

5. The electrode for a lithium secondary battery according to any one of claims 1 to 4, wherein the coating layer has a thickness of 0.1 µm to 1 µm.

6. The electrode for a lithium secondary battery according to any one of claims 1 to 5, wherein a ratio of a peak area corresponding to a Li-C bond relative to a peak area corresponding to a C-C bond in the coating layer, as determined by XPS analysis, is 0.3 to 0.85.

7. The electrode for a lithium secondary battery according to any one of claims 1 to 6, wherein the coating layer exhibits, as determined by XPS analysis, a peak value at 282 eV to 283 eV.

8. A lithium secondary battery comprising an electrode for a lithium secondary battery according to any one of claims 1 to 7.

9. The lithium secondary battery according to claim 8, wherein the electrode is an anode for a lithium secondary battery.

10. The lithium secondary battery according to claims 8 or 9, further comprising a cathode comprising a lithium-nickel metal oxide including 80 mol% or more of nickel based on the total molar amount of elements excluding oxygen.

11. The lithium secondary battery according to any one of claims 8 to 10, further comprising a sulfide-based solid electrolyte.

12. A method for preparing an electrode for a lithium secondary battery comprising:
preparing a lithium metal layer;
dropping an acetylene derivative onto at least one surface of the lithium metal layer; and
drying the lithium metal layer onto which the acetylene derivative has been dropped.

13. The method for preparing an electrode for a lithium secondary battery according to claim 12, wherein the acetylene derivative comprises a compound represented by Formula 2 below: 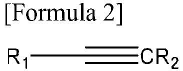 wherein in Formula 2, R₁ is a substituted or unsubstituted aromatic ring, R₂ is hydrogen, a halogen group, or -SiRR'R", and R, R' and R" are each independently a substituted or unsubstituted C₁-C₃₀ alkyl group.

14. The method for preparing an electrode for a lithium secondary battery according to claim 13, wherein Formula 2 is represented by Formula 3 below: 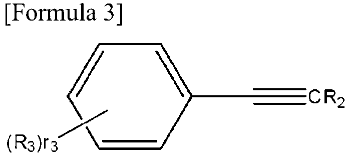
wherein in Formula 3, R₃ is hydrogen, fluorine, -NO₂, or -OR_{f}, R_{f} is a C₁-C₃₀ alkyl group substituted with fluorine, r₃ is an integer of 1 to 5, and if r₃ is 2 or more, a plurality of R₃s are the same or different from each other, and
R₂ is hydrogen, a halogen group, or -SiRR'R", and R, R' and R" are each independently substituted or unsubstituted C₁-C₃₀ alkyl groups.

15. The method for preparing an electrode for a lithium secondary battery according to claim 14, wherein Formula 2 is represented by any one of Formulas 2-1 to 2-3 below:
